# EUROPÄISCHE PATENTSCHRIFT

(11) **EP 1 970 782 B1**
(45) Veröffentlichungstag und Bekanntmachung des Hinweises auf die Patenterteilung: **18.08.2010**
(21) Anmeldenummer: 07005046.3
(22) Anmeldetag: 12.03.2007
(51) Int. Cl.: G05B 19/042

(54) **Schutzeinrichtung für eine programmierbare datenverarbeitende Einheit**
Protection unit for a programmable data processing unit
Dispositif de protection pour une unité de traitement de données programmable

(43) Veröffentlichungstag der Anmeldung: 17.09.2008
(73) Patentinhaber: Secunet Security Networks Aktiengesellschaft, 45128 Essen (DE)
(72) Erfinder: Knechtel, Harry, Dipl.-Ing., 85459 Berglern (DE); Hofmann, Marco, Dipl.-Ing., 81373 München (DE); Hettstedt, Gunnar, Dipl.Wirt.Ing., 85570 Markt Schwaben (DE); Lindlbauer, Marc, Dr., 80335 München (DE)
(74) Vertreter: Rohmann, Michael

(56) Entgegenhaltungen:
- EP-A1- 1 441 264
- EP-A1- 1 521 148
- WO-A-2004/109411
- DE-A1- 10 205 809
- US-B1- 6 571 191

## Beschreibung

Die Erfindung betrifft eine Schutzeinrichtung (Protection Unit) für eine (programmierbare) datenverarbeitende Einheit, wobei die datenverarbeitende Einheit zumindest einen Betriebsspeicher aufweist, in welchem Betriebs-Daten für den Betrieb der datenverarbeitenden Einheit speicherbar oder gespeichert sind. - Programmierbare datenverarbeitende Einheit meint insbesondere eine Steuereinheit bzw. ein Steuergerät innerhalb eines Fahrzeuges, Flugzeuges, Schiffes, einer Maschine in einer Fertigungsstraße oder einer fernadministrierten Anlage (siehe z.B. US 6 571 191 B1). Solche datenverarbeitenden Einheiten, z. B. programmierbare Steuergeräte, sind heutzutage in großer Anzahl bzw. großer Vielfalt in modernen Fahrzeugen oder dergleichen integriert. Sie sind in zunehmendem Maße mit ihrer Umwelt vernetzt, zumal Bereiche des "Infotainments" bzw. der Verkehrstelematik in zunehmendem Maße an Bedeutung gewinnen.

Es ist grundsätzlich bekannt, datenverarbeitende Einheiten, z. B. Personal Computer, die in Rechnernetze bzw. in das Internet eingebunden sind, durch Anti-Viren-Software oder andere Programme vor Viren bzw. vor Angriffen zu schützen. Auf die Zuverlässigkeit bzw. Sicherheit von datenverarbeitenden Einheiten in z. B. Fahrzeug hatten derartige Entwicklungen keinen Einfluss.

Der Erfindung liegt die Aufgabe zugrunde, eine (programmierbare) Schutzeinrichtung für eine (programmierbare) datenverarbeitende Einheit, z. B. ein Fahrzeug-Steuergerät, zu schaffen, welche einen zuverlässigen und sicheren Betrieb der datenverarbeitenden Einheit gewährleistet.

Zur Lösung dieser Aufgabe lehrt die Erfindung eine Schutzeinrichtung für eine (programmierbare) datenverarbeitende Einheit, z. B. eine Steuereinheit eines Fahrzeuges oder dergleichen, wobei die datenverarbeitende Einheit zumindest einen Betriebsspeicher aufweist, in welchem Betriebs-Daten für den Betrieb der datenverarbeitenden Einheit speicherbar oder gespeichert sind,
wobei die Schutzeinrichtung in einer gegen unautorisierte Zugriffe geschützten Ausführungsumgebung zumindest eine Überwachungslogik und zumindest eine Schutzlogik aufweist,
wobei die Überwachungslogik zur Überwachung von unautorisierten Veränderungen, Zugriffen oder dergleichen Schutzverletzungen, der in dem Betriebsspeicher gespeicherten Betriebs-Daten auf den Betriebsspeicher zugreift und im Falle einer Schutzverletzung die Schutzlogik benachrichtigt und
wobei die Schutzlogik im Falle einer Schutzverletzung nicht kompromittierte Ersatz-Daten für einen Ersatzbetrieb der datenverarbeitenden Einheit zur Verfügung stellt. - Daten (Betriebs-Daten einerseits und Ersatz-Daten andererseits) meint im Rahmen der Erfindung Daten, Programme, Speicherbereiche oder dergleichen, welche den Betrieb einer solchen datenverarbeitenden Einheit bestimmen bzw. beeinflussen. Schutzverletzung meint im Rahmen der Erfindung insbesondere unautorisierte Zugriffe auf den Betriebsspeicher bzw. die Betriebs-Daten sowie unautorisierte Veränderungen der Betriebs-Daten.

Im Rahmen der Erfindung wird folglich eine Schutzeinrichtung bzw. "Protection Unit" für eine programmierbare datenverarbeitende Einheit, z. B. ein Steuergerät eines Fahrzeuges zur Verfügung gestellt, welche die datenverarbeitende Einheit vor unerlaubten Zugriffen bzw. vor unautorisierten Veränderungen der Betriebs-Daten schützt. Unautorisierte Veränderungen der Daten und folglich Schutzverletzungen der datenverarbeitenden Einheit lassen sich kontinuierlich bzw. zyklisch mit Hilfe der Überwachungslogik der Schutzeinrichtung feststellen. Entsprechende Prüfprogramme (Überwachungslogik) sind selbst manipulationssicher innerhalb der Schutzeinrichtung gespeichert und werden manipulationssicher ausgeführt. Insbesondere ist die Schutzeinrichtung gegen unautorisiertes Auslesen bzw. Schreiben von Daten durch diese Programme geschützt. Ermittelt die Überwachungslogik eine Schutzverletzung, so informiert sie die Schutzlogik, welche dann insbesondere nicht kompromittierte Ersatz-Daten für den Betrieb bzw. für einen Ersatzbetrieb der datenverarbeitenden Einheit zur Verfügung stellt. Diese Ersatz-Daten bzw. der Ersatzbetrieb bilden folglich "Notlaufeigenschaften" ab. Dabei geht die Erfindung von der Erkenntnis aus, dass es nicht nur erforderlich ist, Manipulationen bzw. unautorisierte Zugriffe auf den Betriebsspeicher zu ermitteln, sondern dass trotz einer solchen Schutzverletzung ein einwandfreier Betrieb oder zumindest ein "Notlaufbetrieb" bzw. "Ersatzbetrieb" der datenverarbeitenden Einheit gewährleistet werden muss. Damit ist beispielsweise in Fahrzeugen gewährleistet, dass im Falle einer unerlaubten Manipulation zumindest ein Notlaufbetrieb bzw. Notbetrieb zur Verfügung gestellt wird. Diese Überlegung trägt insbesondere der Tatsache Rechnung, dass eine fortschreitende Elektrifizierung bzw. Automatisierung der primären Fahrfunktionen in Fahrzeugen (Drive-by-Wire-Technologie) erhöhte Sicherheitsanforderungen stellt. Es muss jederzeit sichergestellt werden, dass sich die beteiligten Steuergeräte spezifikationskonform verhalten und dass im Fehlerfall schnell auf sichere Notlaufeigenschaften zurückgegriffen werden kann. Die erfindungsgemäße Sicherheitseinrichtung bildet folglich einen sicheren Vertrauensanker, der entsprechenden Schutzmaßnahmen die volle Wirksamkeit verleiht und der Schutzoperationen schnell ausführen kann, um gefährdende Verhaltensweisen des Fahrzeuges durch Manipulation von Steuergeräten rechtzeitig zu verhindern.

Vorteilhafte Weiterbildungen der Erfindung werden im Folgenden erläutert. So ist vorgesehen, dass die Sicherheitseinheit zumindest einen Überwachungsspeicher aufweist, in welchem Informationen über eine festgestellte Schutzverletzung oder mehrere Schutzverletzungen speicherbar sind. Ferner ist vorzugsweise eine Informationsschnittstelle vorgesehen, über welche Informationen über Schutzverletzungen und/oder sonstige Statusinformationen aus der Schutzeinrichtung auslesbar sind. Über diese Informationsschnittstelle können Informationen über die durch die Überwachungslogik festgestellten Schutzverletzungen und den Start der Notlaufeigenschaften bzw. der Ersatz-Daten aus dem Überwachungsspeicher autorisiert ausgelesen und den zur Benachrichtigung des Benutzers relevanten Einheiten bereitgestellt werden. Die zum Auslesen benötigten Autorisierungsinformationen sind in der Ausführungsumgebung hinterlegt. Dabei können unterschiedliche Autorisierungsinformationen in der Ausführungsumgebung hinterlegt werden, so dass in Abhängigkeit von den an die Informationsschnittstelle herangetragenen Autorisierungsinformationen unterschiedliche Speicherbereiche ausgelesen werden können. Insofern können Rollenmodelle für den Zugriff auf den Überwachungsspeicher realisiert werden.

Nach einem weiteren Vorschlag der Erfindung weist die Schutzeinrichtung eine Administrationsschnittstelle auf. Über diese Administrationsschnittstelle können Autorisierungsinformationen der Ausführungsumgebung ausgetauscht werden. Dazu enthält die Ausführungsumgebung zumindest eine initiale Autorisierungsinformation. Damit können nach einer erfolgreichen Autorisierung von außen neue Autorisierungsinformationen sowie neue Überwachungslogiken und/oder Schutzlogiken in die Ausführungsumgebung eingebracht werden.

Die Ausführungsumgebung für die Ablauflogiken der Schutzeinrichtung ist vorzugsweise als Hardware bzw. in Hardware realisiert. Diese Ausführungsumgebung stellt eine gegen unautorisierte Schreib- und Lesezugriffe geschützte Laufzeitumgebung für die beschriebenen Logiken und Speicher dar. Die Ausführungsumgebung enthält die Autorisierungsinformationen, um die beschriebenen Notlaufeigenschaften bzw. den Ersatzbetrieb sicher, das heißt erst nach erfolgreicher Autorisierung zur Ausführung bringen zu können. Die Ausführungsumgebung enthält darüber hinaus die Autorisierungsinformation, um geänderte Schutzlogiken und/oder Überwachungslogiken in der Schutzeinrichtung bzw. "Protection Unit" autorisiert nachladen zu können. Dabei kann es sich z. B. um kryptographische Schlüssel handeln, die Signaturen der genannten Logiken prüfen können oder ggf. die Logiken entschlüsseln können.

Es liegt im Rahmen der Erfindung, dass die Überwachungslogik Teil der Ausführungsumgebung und folglich Teil der zugrunde liegenden Hardware sein kann. In diesem Falle ist die Überwachungslogik folglich fest in Hardware realisiert bzw. in die Hardware integriert. Vorzugsweise ist die Überwachungslogik jedoch als Software realisiert. Software meint im Rahmen der Erfindung auch einen lauffähigen Code für einen freiprogrammierbaren Baustein, z. B. einen FPGA. Eine solche als Software ausgebildete Überwachungslogik wird vorzugsweise erst zum Ausführungszeitpunkt in die Ausführungsumgebung geladen. Die Speicherung erfolgt dabei entweder innerhalb der Schutzeinrichtung oder in einem Speicherbereich der datenverarbeitenden Einheit. Bevor die Überwachungslogik zur Ausführung gelangt, prüft die Ausführungsumgebung anhand der dort gespeicherten Autorisierungsinformationen, ob die Überwachungslogik zur Ausführung autorisiert ist. Zur Laufzeit realisiert die Überwachungslogik eine Schnittstelle zur datenverarbeitenden Einheit, über welche die entsprechenden Daten (bzw. Programme/Speicherbereiche) mit Hilfe einer entsprechenden Logik auf Korrektheit "permanent" geprüft werden. Diese kann z. B. durch Überprüfung einer elektronischen Signatur der Daten (bzw. Programme/Speicherbereiche) über kryptographische Mechanismen erfolgen, oder durch die Überwachung von Speichergrenzen, die von einem ausgeführten Programm nicht verlassen werden dürfen. Auf diese Weise können z. B. bösartige Veränderungen am Code durch Viren, Trojaner, Buffer Overflows etc. erkannt werden.

Auch die Schutzlogik kann Teil der Ausführungsumgebung und folglich der zugrunde liegenden Hardware sein, sie kann folglich ebenfalls fest in Hardware realisiert sein. Vorzugsweise ist jedoch auch die Schutzlogik als Software realisiert. Software umfasst auch hier einen lauffähigen Code für einen freiprogrammierbaren Baustein, z. B. einen FPGA. Insofern kann auch die Schutzlogik erst zum Ausführungszeitpunkt in die Ausführungsumgebung geladen werden. Die Speicherung erfolgt dabei entweder innerhalb der Schutzeinrichtung oder in einem Speicherbereich der datenverarbeitenden Einheit.

Es liegt im Übrigen im Rahmen der Erfindung, dass der Überwachungsspeicher, die Informationsschnittstelle, die Administrationsschnittstelle und/oder die Betriebs-Daten bzw. der Betriebsspeicher in Software bzw. als Code für einen freiprogrammierbaren Baustein (FPGA) realisiert sind.

Gegenstand der Erfindung ist auch eine datenverarbeitende Einheit, z. B. ein Steuergerät für ein Fahrzeug oder dergleichen, mit zumindest einer Schutzeinrichtung der beschriebenen Art. Die Erfindung stellt folglich auch die Kombination aus einerseits einer datenverarbeitenden Einheit und andererseits einer Schutzeinrichtung unter Schutz, d. h. eine datenverarbeitende Einheit, in welche zumindest eine Schutzeinrichtung integriert ist.

Ferner ist Gegenstand der Erfindung ein Verfahren zur Überwachung einer datenverarbeitenden Einheit mittels zumindest einer Schutzeinrichtung der beschriebenen Art, wobei die Überwachungslogik auf den Betriebsspeicher zugreift und eventuelle Schutzverletzungen ermittelt, wobei die Überwachungslogik im Falle einer Schutzverletzung die Schutzlogik benachrichtigt und wobei die Schutzlogik im Falle einer Schutzverletzung Ersatz-Daten für den Betrieb der datenverarbeitenden Einheit bzw. für einen Ersatzbetrieb zur Verfügung stellt. Informationen über eine ermittelte Schutzverletzung werden in dem Überwachungsspeicher gespeichert. Dabei kann die Überwachungslogik kontinuierlich oder vorzugsweise zyklisch (bzw. quasi-kontinuierlich) mit vorgegebener Taktfrequenz auf den Betriebsspeicher zugreifen. Zur Überprüfung von Schutzverletzungen erfolgt z. B. eine Überprüfung einer elektronischen Signatur der Betriebs-Daten.

Im Rahmen der Erfindung wird folglich mit Hilfe der Überwachungslogik der Speicher der datenverarbeitenden Einheit "permanent" überprüft. Dieses kann z. B. durch Überprüfung einer elektronischen Signatur der Daten über kryptographische Mechanismen erfolgen oder durch Überwachung von Speichergrenzen, die von einem ausgeführten Programm nicht verlassen werden dürfen. Auf diese Weise können z. B. bösartige Veränderungen am Code durch Viren, Trojaner, Buffer Overflows etc. erkannt werden. Die Abtastrate, d. h. die Frequenz, mit der die Korrektheit der Daten von der Überwachungslogik geprüft wird, ist über die Administrationsschnittstelle konfigurierbar. Hat die Überwachungslogik eine Schutzverletzung erkannt, so benachrichtigt sie die Schutzlogik über die Art der Schutzverletzung. Bevor die Schutzlogik zur Ausführung gelangt, prüft die Ausführungsumgebung anhand der dort gespeicherten Autorisierungsinformationen, ob die Schutzlogik zur Ausführung autorisiert ist. Die Schutzlogik nimmt Daten nur von einer durch die Ausführungsumgebung autorisierten Überwachungslogik entgegen. Zur Laufzeit realisiert die Schutzlogik eine Schnittstelle zur datenverarbeitenden Einheit, über die der Zugriff der datenverarbeitenden Einheit auf die von der Schutzverletzung betroffenen Daten unterbunden wird.

Von besonderer Bedeutung ist, dass in Abhängigkeit von der Art der Schutzverletzung verschiedene Ersatz-Daten zur Verfügung gestellt werden können. Die Schutzlogik aktiviert folglich eine der gespeicherten Ersatz-Daten bzw. Notlaufeigenschaften ausfallsicher. Dazu wird die entsprechende bzw. geeignete Notlaufeigenschaft mit Hilfe der in der Ausführungsumgebung hinterlegten Autorisierungsinformation geprüft und im Erfolgsfall zur Ausführung gebracht. Schlägt die Autorisierung fehl, so ist eine initiale Notlaufeigenschaft in der Schutzlogik selbst hinterlegt, die dann zur Ausführung kommt. Je nach Ausprägung der Schutzlogik übernimmt dann die Schutzeinheit bzw. Protection Unit die Ausführung der Notlaufeigenschaft. Falls die Schutzlogik nicht die Ausführung der Notlaufeigenschaft übernimmt, so wird die Notlaufeigenschaft der datenverarbeitenden Einheit zur Ausführung übergeben und die Ausführung in der Laufzeitumgebung der datenverarbeitenden Einheit über die Schnittstelle der Schutzlogik gestartet. Anschließend übernimmt die Überwachungslogik die Überwachung der zur Ausführung gebrachten Notlaufeigenschaften anstelle der von der Schutzverletzung überwachten Daten.

Insofern handelt es sich im Rahmen der Erfindung bei den beschriebenen Ersatz-Daten, die auch als "Notlaufeigenschaft" bezeichnet werden vorzugsweise um eine Logik bzw. um mehrere Logiken, die entweder innerhalb der Schutzeinheit anstelle und folglich als Ersatz für die in der datenverarbeitenden Einheit vorhandenen Betriebs-Daten zur Ausführung gebracht werden oder aber auch außerhalb der Schutzeinheit in der datenverarbeitenden Einheit durch die Schutzlogik ausgeführt werden. In jedem Falle enthält jede Notlaufeigenschaft Autorisierungsinformationen, z. B. eine elektronische Signatur, die eine sichere Überprüfung der Autorisierung der Notlaufeigenschaft durch die Schutzlogik innerhalb der Ausführungsumgebung ermöglicht. Stets kommt die Notlaufeigenschaft erst nach einer erfolgreichen Autorisierung zur Ausführung. Die Speicherung der Notlaufeigenschaften bzw. der Ersatz-Daten erfolgt innerhalb der Schutzeinrichtung. Alternativ können die Ersatz-Daten bzw. Notlaufeigenschaften auch in einem Speicherbereich der datenverarbeitenden Einheit hinterlegt werden und dann von der Schutzlogik sicher geladen werden. Entsprechende Ersatz-Daten bzw. Notlaufeigenschaften können autorisiert über die Autorisierungsinformationen in der Ausführungsumgebung in die Schutzeinrichtung oder die datenverarbeitende Einheit nachgeladen werden.

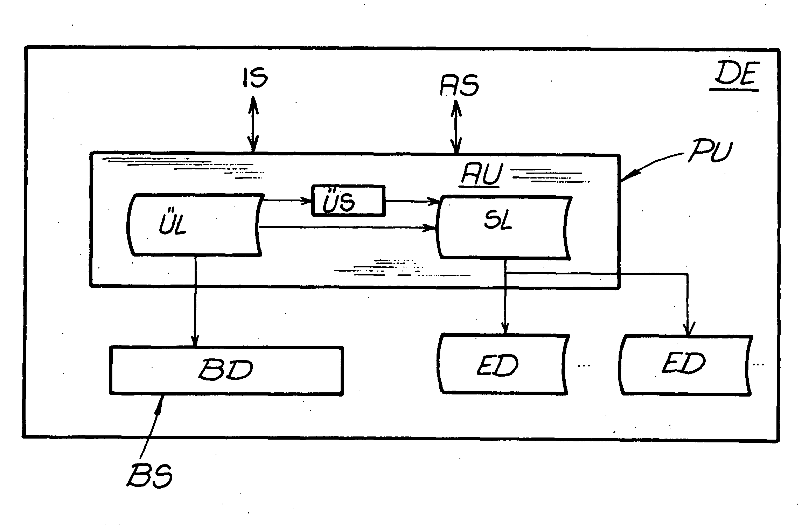

Im Folgenden wird die Erfindung anhand einer lediglich ein Ausführungsbeispiel darstellenden Zeichnung näher erläutert. Die einzige Figur zeigt in stark vereinfachter schematischer Darstellung eine datenverarbeitende Einheit mit einer integrierten erfindungsgemäßen Schutzeinrichtung.

In der Figur ist eine datenverarbeitende Einheit DE angedeutet. Dabei kann es sich um ein Steuergerät eines Fahrzeuges, z. B. ein Airbag-Steuergerät, eine Motor-Steuerung, eine Getriebe-Steuerung oder dergleichen, handeln. Diese datenverarbeitende Einheit bzw. Steuereinheit DE weist einen Betriebsspeicher BS auf, in welchem Betriebs-Daten BD für den Betrieb dieser Steuereinheit gespeichert sind. Insofern können diese Betriebs-Daten BD auch Betriebsprogramme oder dergleichen darstellen.

In der Figur ist nun angedeutet, dass erfindungsgemäß in diese datenverarbeitende Einheit bzw. Steuereinheit DE eine erfindungsgemäße Schutzeinrichtung PU integriert ist. Diese Schutzeinrichtung PU stelle eine gegen unautorisierte Zugriffe geschützte Ausführungsumgebung AU zur Verfügung, wobei diese Ausführungsumgebung AU z. B. als Hardware-Baustein realisiert sein kann.

In die Schutzeinrichtung PU sind einerseits eine Überwachungslogik ÜL und andererseits eine Schutzlogik SL integriert. Diese werden beispielsweise von freiprogrammierbaren Bausteinen (FPGA's) bzw. entsprechendem Code eines solchen FPGA's gebildet. Ferner ist ein Überwachungsspeicher ÜS vorgesehen. Die Kommunikation der Schutzeinrichtung PU erfolgt über eine Informationsschnittstelle IS sowie eine Administrationsschnittstelle AS.

Die erfindungsgemäße Schutzeinrichtung bzw. Protection Unit PU arbeitet vorzugsweise wie folgt:
In dem Betriebsspeicher BS sind Betriebs-Daten BD bzw. Betriebsprogramme oder dergleichen gespeichert, welche für den Betrieb der entsprechenden Steuereinheit DE, z. B. der Airbag-Steuerung erforderlich sind. Um einen sicheren Betrieb einer solchen Steuereinheit DE zu gewährleisten, erfolgt mit Hilfe der erfindungsgemäßen Schutzeinrichtung PU eine permanente Überwachung auf unberechtigte Zugriffe bzw. unberechtigte Veränderungen dieser Betriebs-Daten und folglich eine Überprüfung bzw. Überwachung auf unberechtigte Schutzverletzungen.

Stellt die Überwachungslogik ÜL eine solche Schutzverletzung fest, so werden Informationen über die Art dieser Schutzverletzung sowie sonstige Informationen, z. B. den Zeitpunkt der Schutzverletzung im Überwachungsspeicher ÜS gespeichert. Außerdem informiert die Überwachungslogik ÜL die Schutzlogik SL über die Art der Schutzverletzung. In Abhängigkeit von der Art der Schutzverletzung kann die Schutzlogik SL nun Ersatz-Daten ED für einen Ersatzbetrieb der Steuereinheit DE zur Verfügung stellen. Solche Ersatz-Daten ED bilden folglich eine Notlaufeigenschaft für einen Notlauf bzw. Notbetrieb der Steuereinheit DE. In der Figur ist angedeutet, dass die Schutzlogik SL verschiedene Ersatz-Daten ED bzw. verschiedene Notlaufeigenschaften zur Verfügung stellen kann, und zwar in Abhängigkeit von der Art der ermittelten Schutzverletzung. Im Rahmen der Erfindung kann folglich flexibel auf Art bzw. Grad der Schutzverletzung reagiert werden, in dem eine für den jeweiligen Fall vorbereitete geeignete Notlaufeigenschaft ED aktiviert wird.

Über die in der Figur angedeutete Informationsschnittstelle IS können Informationen über die durch die Überwachungslogik ÜL festgestellte Schutzverletzung und über den Start eines Ersatzbetriebes (bzw. eine Notlaufeigenschaft) aus dem Überwachungsspeicher ÜS autorisiert ausgelesen und den zur Benachrichtigung des Benutzers relevanten Einheiten bereitgestellt werden. Die in diesem Zusammenhang zum Auslesen benötigten Autorisierungsinformationen sind in der Ausführungsumgebung AU hinterlegt.

Über die in der Figur ebenfalls angedeutete Administrationsschnittstelle AS können insbesondere Autorisierungsinformationen der Ausführungsumgebung AU ausgetauscht werden. Über die Administrationsschnittstelle AS können folglich nach einer erfolgreichen Autorisierung von außen (z. B. über einen Administrator) neue Autorisierungsinformationen eingebracht werden sowie eine Überwachungslogik ÜL und/oder eine Schutzlogik SL in die Ausführungsumgebung AU nachgeladen werden, sofern die Schutzlogik SL nicht selbst in Hardware realisiert ist, sondern z. B. als FPGA-Code.

Die lediglich angedeutete Ausführungsumgebung AU stellt eine gegen unautorisierte Schreib- und Lesezugriffe geschützte Laufzeitumgebung für die oben genannten Logiken und Speicher dar. Die Ausführungsumgebung AU enthält die Autorisierungsinformationen und folglich kryptographische Schlüssel, mit welchen entsprechende Signaturen der beschriebenen Logiken geprüft oder ggf. die Logiken entschlüsselt werden können.

Insgesamt gewährleistet die erfindungsgemäße Protection Unit einen sicheren Betrieb einer Steuereinheit oder dergleichen, z. B. in einem Kraftfahrzeug. Dieses gelingt, obwohl solche Fahrzeuge üblicherweise nicht permanent "online" sind. Eine ständige online-Aktualisierung von z. B. Antiviren-Software ist nicht erforderlich. Durch die Vernetzung von Steuergeräten innerhalb von Fahrzeugen wären Manipulationen oder Fehlfunktionen der online-Zugänge besonders kritisch, da durch einen unautorisierten Zugriff auf sicherheitsrelevante Funktionen über die Bussysteme besondere Gefahren für die Insassen auftreten können. Die Erfindung schafft hier Abhilfe durch Erzeugung eines sicheren Vertrauensankers im Fahrzeug, der z. B. unter alleiniger Kontrolle eines Fahrzeugherstellers liegen kann und folglich den Schutzmaßnahmen die volle Wirksamkeit verleiht. Schutzoperationen werden schnell ausgeführt und gefährliche Verhaltensweisen des Fahrzeuges durch Manipulationen von Steuergeräten werden rechtzeitig verhindert.

## Patentansprüche

1. Schutzeinrichtung (PU) für eine als Steuereinheit eines Fahrzeuges, Flugzeuges, Schiffes oder dergleichen ausgebildete datenverarbeitende Einheit (DE),
**dadurch gekennzeichnet, daß** die in die datenverarbeitende Einheit integrierte Schutzeinrichtung (PU) in einer gegen unautorisierte Zugriffe geschützten Ausführungsumgebung (AU) zumindest eine Überwachungslogik (ÜL) und zumindest eine Schutzlogik (SL) aufweist,
daß die Ausführungsumgebung (AU) als Hardware realisiert ist und eine gegen unautorisierte Schreib- und Lesezugriffe geschützte Laufzeitumgebung für die Überwachungslogik (ÜL) und die Schutzlogik (SL) bildet,
daß die Überwachungslogik (ÜL) zur Überwachung von unautorisierten Veränderungen, Zugriffen oder dergleichen Schutzverletzungen der in einem Betriebsspeicher der datenverarbeitenden Einheit (DE) gespeicherten Betriebs-Daten (BD) der datenverarbeitenden Einheit (DE) auf den Betriebsspeicher (BS) zugreift und im Falle einer Schutzverletzung die Schutzlogik (SL) benachrichtigt und
daß die Schutzlogik (SL) im Falle einer Schutzverletzung Ersatz-Daten (ED) für den Betrieb bzw. für einen Ersatz-Betrieb der datenverarbeitenden Einheit (DE) zur Verfügung stellt.

2. Schutzeinrichtung nach Anspruch 1, mit zumindest einem Überwachungsspeicher (ÜS) in welchem Informationen über eine oder mehrere festgestellte Schutzverletzungen speicherbar sind.

3. Schutzeinrichtung nach Anspruch 1 oder 2, mit zumindest einer Informationsschnittstelle (IS), über welche Informationen über Schutzverletzungen und/oder sonstige Statusinformationen aus der Schutzeinrichtung (PU) auslesbar sind.

4. Schutzeinrichtung nach einem der Ansprüche 1 bis 3, mit zumindest einer Adminisirationsschnittstelle (AS), über welche Autorisierungsinformationen, Konfigurationen, eine Überwachungslogik, eine Schutzlogik oder sonstige Daten/Programme in die bzw. aus der Schutzeinrichtung (PU) ein- und auslesbar sind.

5. Schutzeinrichtung nach einem der Ansprüche 1 bis 4, wobei die Überwachungslogik (ÜL), die Schutzlogik (SL), der Überwachungsspeicher (ÜS), die Informationsschnittstelle (IS), die Administrationsschnittstelle (AS) und/oder die Ersatz-Daten (ED) als Software, z. B. als Code eines freiprogrammierbaren Bausteins, realisiert sind.

6. Datenverarbeitende Einheit, die als Steuereinheit eines Fahrzeuges oder dergleichen ausgebildet ist, mit zumindest einer Schutzeinrichtung (PU) nach einem der Ansprüche 1 bis 5.

7. Verfahren zur Überwachung einer datenverarbeitenden Einheit, in welche zumindest eine Schutzeinrichtung nach einem der Ansprüche 1 bis 5 integriert ist,
wobei die Überwachungslogik auf die Betriebs-Daten zugreift und Schutzverletzungen ermittelt,
wobei die Überwachungslogik im Falle einer Schutzverletzung die Schutzlogik benachrichtigt und
wobei die Schutzlogik im Falle einer Schutzverletzung Ersatz-Daten für den Betrieb bzw. einen Ersatzbetrieb der datenverarbeitenden Einheit zur Verfügung stellt,
wobei die Ersatz-Daten mit Hilfe von in der Ausführungsumgebung hinterlegten Autorisierungsinformationen geprüft werden.

8. Verfahren nach Anspruch 7, wobei Informationen über eine Schutzverletzung in dem Überwachungsspeicher gespeichert werden.

9. Verfahren nach Anspruch 7 oder 8, wobei die Überwachungslogik kontinuierlich oder zyklisch bzw. quasi-kontinuierlich mit vorgegebener Taktfrequenz auf die Betriebs-Daten bzw. den Betriebsspeicher zugreift.

10. Verfahren nach Anspruch 9, wobei die Taktfrequenz über die Administrationsschnittstelle vorgegeben wird.

11. Verfahren nach einem der Ansprüche 7 bis 10, wobei zur Überprüfung von Schutzverletzungen die Überprüfung zumindest einer elektronischen Signatur der Betriebs-Daten erfolgt.

12. Verfahren nach einem der Ansprüche 7 bis 11, wobei die Schutzlogik im Falle einer Schutzverletzung den Zugriff auf die Betriebs-Daten in dem Betriebsspeicher der datenverarbeitenden Einheit unterbindet.

13. Verfahren nach einem der Ansprüche 7 bis 12, wobei in Abhängigkeit von der Art der Schutzverletzung verschiedene Ersatz-Daten zur Verfügung gestellt werden.

14. Verfahren nach einem der Ansprüche 7 bis 13, wobei die Ersatz-Daten für einen Ersatzbetrieb der datenverarbeitenden Einheit von der Schutzeinrichtung und/oder von der datenverarbeitenden Einheit verarbeitet werden.

15. Verfahren nach einem der Ansprüche 7 bis 14, wobei nach einer Schutzverletzung die zur Verfügung gestellten Ersatz-Daten von der Überwachungslogik (ÜL) auf eventuelle Schutzverletzungen überprüft werden.

## Claims

1. Protection unit (PU) for a data processing unit (DE) which is configured as a control unit of a vehicle, aircraft, ship or the like,
**characterised in that** the protection unit (PU) which is integrated in the data processing unit in an execution environment (AU) which is protected from unauthorised access has at least one monitoring logic system (ÜL) and at least one protection logic system (SL),
that the execution environment (AU) is realised as hardware and forms a runtime environment which is protected from unauthorised write and read access for the monitoring logic system (ÜL) and the protection logic system (SL),
that the monitoring logic system (ÜL) accesses the operating memory (BS) in order to monitor unauthorised changes, access or similar segmentation faults of the operating data (BD) of the data processing unit (DE) which is stored in an operating memory of the data processing unit (DE), and in the event of a segmentation fault notifies the protection logic system (SL), and
that in the event of a segmentation fault the protection logic system (SL) makes available substitute data (ED) for the operation or substitute operation of the data processing unit (DE).

2. Protection unit according to Claim 1, with at least one monitoring memory (ÜS) in which information about one or a plurality of detected segmentation faults can be stored.

3. Protection unit according to Claim 1 or 2, with at least one information interface (IS), by means of which information about segmentation faults and/or other status information can be read from the protection unit (PU).

4. Protection unit according to one of Claims 1 to 3, with at least one administration interface (AS), by means of which authorisation information, configurations, a monitoring logic system, a protection logic system or other data/programs can be read into or out of the protection unit (PU).

5. Protection unit according to one of Claims 1 to 4, wherein the monitoring logic system (ÜL), the protection logic system (SL), the monitoring memory (ÜS), the information interface (IS), the administration interface (AS) and/or the substitute data (ED) are realised as software, for example as a code of a freely programmable module.

6. Data processing unit, which is configured as a control unit of a vehicle or the like, with at least one protection unit (PU) according to one of Claims 1 to 5.

7. Method for monitoring a data processing unit in which at least one protection unit according to one of Claims 1 to 5 is integrated,
wherein the monitoring logic system accesses the operating data and detects segmentation faults,
wherein the monitoring logic system notifies the protection logic system in the event of a segmentation fault, and
wherein, in the event of a segmentation fault, the protection logic system makes available substitute data for the operation or substitute operation of the data processing unit,
wherein the substitute data is checked using authorisation information which is stored in the execution environment.

8. Method according to Claim 7, wherein information about a segmentation fault is stored in the monitoring memory.

9. Method according to Claim 7 or 8, wherein the monitoring logic system accesses the operating data or the operating memory continuously or cyclically or quasi-continuously with a predefined cycle frequency.

10. Method according to Claim 9, wherein the cycle frequency is predefined by means of the administration interface.

11. Method according to one of Claims 7 to 10, wherein at least one electronic signature of the operating data is checked in order to check segmentation faults.

12. Method according to one of Claims 7 to 11, wherein the protection logic system prevents access to the operating data in the operating memory of the data processing unit in the event of a segmentation fault.

13. Method according to one of Claims 7 to 12, wherein different substitute data is made available depending on the type of segmentation fault.

14. Method according to one of Claims 7 to 13, wherein the substitute data for substitute operation of the data processing unit is processed by the protection unit and/or by the data processing unit.

15. Method according to one of Claims 7 to 14, wherein, after a segmentation fault, the substitute data which has been made available is checked for any segmentation faults by the monitoring logic system (ÜL).

## Revendications

1. Dispositif de protection (PU) pour une unité (DE) de traitement de données, conçue comme unité de commande d'un véhicule, avion, bateau ou similaires,
**caractérisé en ce que**
le dispositif de protection (PU) intégré dans l'unité de traitement de données présente au moins une logique de contrôle (ÜL) et au moins une logique de protection (SL) dans un environnement d'exécution (AU) protégé contre des accès non autorisés,
**en ce que** l'environnement d'exécution (AU) est réalisé sous forme de hardware et forme un environnement de temps de propagation protégé contre des accès d'écriture et de lecture non autorisés pour la logique de contrôle (ÜL) et la logique de protection (SL),
**en ce que** la logique de contrôle (ÜL) a recours à la mémoire de service (BS) pour le contrôle de modifications, d'accès non autorisés ou de violations de protection similaires concernant les données d'exploitation (BD), stockées dans une mémoire de service de l'unité de traitement de données (DE), de l'unité de traitement (DE) et informe la logique de protection (SL) dans le cas d'une violation de protection et
**en ce que** la logique (SL) met à disposition dans le cas d'une violation de protection des données de remplacement (ED) pour le fonctionnement ou pour un fonctionnement de remplacement de l'unité de traitement de données (DE).

2. Dispositif de protection selon la revendication 1, comprenant au moins une mémoire de contrôle (ÜS) dans laquelle des informations peuvent être stockées au moyen d'une ou de plusieurs violations de protection constatées.

3. Dispositif de protection selon la revendication 1 ou 2, comprenant au moins une interface d'information (IS), par laquelle des informations peuvent être extraites du dispositif de protection (PU) au moyen de violations de protection et/ou d'autres informations d'état.

4. Dispositif de protection selon l'une quelconque des revendications 1 à 3, comprenant au moins une interface d'administration (AS), par laquelle des informations d'autorisation, des configurations, une logique de contrôle, une logique de protection ou d'autres données/programmes peuvent être entrées dans le dispositif de protection (PU) ou extraites de ce dispositif.

5. Dispositif de protection selon l'une quelconque des revendications 1 à 4, la logique de contrôle (ÜL), la logique de protection (SL), la mémoire de contrôle (ÜS), l'interface d'information (IS), l'interface d'administration (AS) et/ou les données de remplacement (ED) sont réalisées sous forme de logiciel, par exemple sous forme de code, d'un module librement programmable.

6. Unité de traitement de données, qui est réalisée sous forme d'unité commande d'un véhicule ou similaires, comprenant au moins un dispositif de protection (PU) selon l'une quelconque des revendications 1 à 5.

7. Procédé pour le contrôle d'une unité de traitement de données, dans laquelle est intégré au moins un dispositif de protection selon l'une quelconque des revendications 1 à 5,
la logique de contrôle ayant recours aux données de service et déterminant des violations de protection,
la logique de contrôle informant la logique de protection dans le cas d'une violation de protection et
la logique de protection mettant à disposition dans le cas d'une violation de protection des données de remplacement pour le fonctionnement ou un fonctionnement de remplacement de l'unité de traitement de données,
les données de remplacement étant testées à l'aide des informations d'autorisation déposées dans l'environnement d'exécution.

8. Procédé selon la revendication 7, des informations étant stockées au moyen d'une violation de protection dans la mémoire de contrôle.

9. Procédé selon la revendication 7 ou 8, la logique de contrôle ayant recours de façon continue ou cyclique ou quasi-continue avec une fréquence de cycle prédéfinie aux données de service ou à la mémoire de service.

10. Procédé selon la revendication 9, la fréquence de cycle étant prédéfinie par l'interface d'administration.

11. Procédé selon l'une quelconque des revendications 7 à 10, le contrôle d'au moins une signature électronique des données de service s'effectuant pour le contrôle de violation de protection.

12. Procédé selon l'une quelconque des revendications 7 à 11, la logique de protection interdisant en cas de violation de protection l'accès aux données de service dans la mémoire de service de l'unité de traitement de données.

13. Procédé selon l'une quelconque des revendications 7 à 12, différents données de remplacement étant mises à disposition en fonction de la nature de la violation de protection.

14. Procédé selon l'une quelconque des revendications 7 à 13, les données de remplacement pour un fonctionnement de remplacement de l'unité de traitement de données étant traitées par le dispositif de protection et/ou l'unité de traitement de données.

15. Procédé selon l'une quelconque des revendications 7 à 14, les données de remplacement mises à disposition étant contrôlées après une violation de protection par la logique de contrôle (ÜL) au niveau d'éventuelles violations de protection.
